# EUROPÄISCHE PATENTANMELDUNG

(11) **EP 4 559 315 A2**
(43) Veröffentlichungstag der Anmeldung: **28.05.2025**
(21) Anmeldenummer: 25170003.5
(22) Anmeldetag: 14.04.2022
(51) Int. Cl.: A21B 3/07

(54) **TRANSFERVORRICHTUNG FÜR DIE BELADUNG UND/ODER DIE ENTLADUNG EINER BEHANDLUNGSEINHEIT FÜR LEBENSMITTEL**

(30) Priorität: 22.04.2021 DE 102021110295
(62) Teilanmeldung aus: 22723107.3
(71) Anmelder: MIWE Michael Wenz GmbH, 97450 Arnstein (DE)
(72) Erfinder: Keller, Markus, 97282 Retzstadt (DE); Thees, Andreas, 97450 Gänheim (DE); Leppich-Rudloff, Ronny, 97753 Karlstadt (DE)
(74) Vertreter: Freischem & Partner Patentanwälte mbB

(57) **Zusammenfassung**

Die Erfindung betrifft eine Behandlungseinheit für Lebensmittel (1a, 1b), die durch eine Transfervorrichtung beladen und entladen wird. Die Transfervorrichtung umfasst einen verfahrbaren Transferwagen (3), der eine Tragvorrichtung (20, 22) für mindestens ein Einfahrgestell (27, 28) oder für mindestens einen Produktträger aufweist, mit einem Antrieb (19) zum Verfahren des Transferwagens (3), und mit mindestens einem an dem Transferwagen (3) angeordneten Aktor (21, 23), der dazu bestimmt ist, das Einfahrgestell (27, 28) oder den Produktträger in eine auf einer ersten Seite (13) des Transferwagens (3) befindlichen Aufnahmevorrichtung (25, 26) der Behandlungseinheit (1a, 1b) für Lebensmittel zu bewegen und daraus zu entnehmen.

Aufgabe der Erfindung ist es, das Beladen und/oder Entladen einer Behandlungseinheit (1a, 1b) für Lebensmittel besonders flexibel, zeit- und kosteneffizient zu gestalten.

Diese Aufgabe wird dadurch gelöst, dass der Transferwagen (3) und der Aktor (21, 23) dazu eingerichtet sind, das Einfahrgestell (27, 28) oder den Produktträger zusätzlich in mindestens eine auf einer zweiten Seite (14) des Transferwagens (3) befindlichen zweite Aufnahmevorrichtung (25, 26) zu bewegen und daraus zu entnehmen.

## Beschreibung

Die Erfindung betrifft eine Transfervorrichtung für die Beladung und/oder die Entladung einer Behandlungseinheit für Lebensmittel, insbesondere eines Backofens. Die Erfindung betrifft ferner eine Behandlungsvorrichtung für Lebensmittel mit einer derartigen Transfervorrichtung, sowie ein Verfahren zum Beladen und Entladen der Behandlungseinheit für Lebensmittel mit der Transfervorrichtung.

Die Transfervorrichtung für die Beladung und/oder Entladung einer Behandlungseinheit für Lebensmittel weist einen verfahrbaren Transferwagen, einen Antrieb zum Verfahren des Transferwagens sowie einen Aktor auf. Der Transferwagen ist ein verfahrbarer Wagen, der eine Tragvorrichtung aufweist, die mindestens ein Einfahrgestell oder einen Produktträger trägt. Derartige Vorrichtungen für die Erleichterung der Überführung von Lebensmitteln in eine Behandlungseinheit wird häufig im Backhandwerk eingesetzt. Hier werden Teiglinge, die in einer Gärkammer gegärt und in einem Backofen gebacken werden, für diese Bearbeitungsschritte auf Backbleche aufgelegt. Die Backbleche bilden die Produktträger. Mehrere Backbleche können in Einfahrgestelle angeordnet werden, welche dann mit allen darin aufgenommenen Backblechen bewegt werden können. Der Aktor ist an dem Transferwagen angeordnet und dazu bestimmt, das Einfahrgestell oder den Produktträger von dem Transferwagen in eine Aufnahmevorrichtung der Behandlungseinheit für Lebensmittel zu bewegen und daraus zu entnehmen.

Eine derartige Transfervorrichtung für die Beladung und/oder die Entladung einer Behandlungseinheit (Backofen) ist aus der FR 1 458 682 A bekannt. Die darin offenbarte Transfervorrichtung ermöglicht ein simultanes Transferieren von mehreren Backblechen in einen Backofen hinein oder daraus heraus. Die Backbleche sind auf Tragleisten eines als Rahmen bezeichneten Einfahrgestells übereinander angeordnet. Der Rahmen ist lösbar auf einem manuell verfahrbaren Transferwagen angeordnet. Mit einem an dem Transferwagen angeordneten, manuell betätigbaren Hebesystem ist der Rahmen anhebbar und kann in dem Backraum des Backofens abgesetzt werden.

Eine weitere Transfervorrichtung und ein Verfahren für die Beladung und/oder die Entladung einer Behandlungseinheit ist aus der DE 10 2012 003 799 A1 bekannt. Darin ist eine Vorrichtung beschrieben, die einen Backofen, mindestens einen Beschickungswagen und mindestens eine Handlingeinrichtung aufweist. Der Beschickungswagen nimmt ein als Beschickungsgestell bezeichnetes Einfahrgestell auf, in dem mehrere Produktträger angeordnet sind. Er ist mit der Handlingeinrichtung an dem Backofen koppelbar. Durch die Handlingeinrichtung kann das Beschickungsgestell mit den Produktträgern zwischen dem Backofen und dem Beschickungswagen transferiert werden, wenn der Beschickungswagen mit dem Backofen gekoppelt ist. Die Handlingeinrichtung kann an dem Backofen oder an dem Beschickungswagen integriert sein. Sie kann eine Hubeinrichtung und eine Verfahreinrichtung zum Verfahren des Beschickungsgestells aufweisen. Dabei kann ein Mitnehmer vorgesehen sein, welcher eine Vertikal- und/oder eine Horizontalbewegung ausführt. Der Beschickungswagen weist Führungsschienen und der Backofen weist Einführschienen auf. Das Beschickungsgestell weist Laufräder auf, die auf den Führungsschienen und Einführschienen abrollen, so dass das Beschickungsgestell zwischen dem Beschickungswagen und dem Backofen verfahrbar ist. Eine Weiterbildung dieser Transfervorrichtung ist in der DE 10 2015104517B3 beschrieben.

Diese aus dem Stand der Technik bekannten Transfervorrichtungen können zum Beladen und Entladen der Behandlungsvorrichtungen mit Einfahrgestellen mit einer Seite des Beschickungs- oder Transferwagens gekoppelt werden. Beschickungs- oder Transferwagens sind dafür vorgesehen, manuell verfahren zu werden.

Die WO 2006/097448 A1 offenbart eine Vorrichtung zur Lagerung, Behandlung und Ausgabe von Lebensmitteln, bei der an einer vertikalen Schiene ein vertikal bewegbarer Schlitten ein horizontal verfahrbares Transportmittel aufweist, das einzelne Produktträger von ortsfesten Förderbändern auf der einen Seite der Schiene zu ortsfesten Förderbändern eines Tunnelofens auf der anderen Seite der Schiene transportiert. Diese Vorrichtung ist aufgrund der ortsfest installierten Förderbänder sehr unflexibel.

Aufgabe der Erfindung ist es, das Beladen und/oder Entladen einer Behandlungseinheit für Lebensmittel besonders flexibel, zeit- und kosteneffizient zu gestalten.

Die Aufgabe wird durch eine Transfervorrichtung, eine Behandlungsvorrichtung sowie ein Verfahren mit den Merkmalen der unabhängigen Patentansprüche gelöst.

Die Transfervorrichtung für die Beladung und/oder Entladung einer Behandlungseinheit für Lebensmittel umfasst einen verfahrbaren Transferwagen, der eine Tragvorrichtung für mindestens ein Einfahrgestell oder für mindestens einen Produktträger aufweist, einen Antrieb zum Verfahren des Transferwagens, und einen an dem Transferwagen angeordneten Aktor, der dazu bestimmt ist, das Einfahrgestell oder den Produktträger in eine auf einer ersten Seite des Transferwagens befindlichen Aufnahmevorrichtung der dem Transferwagen zugeordneten Behandlungseinheit zu bewegen und daraus zu entnehmen.

Zur Lösung der obigen Aufgabe sind der Transferwagen und der Aktor dazu eingerichtet, das Einfahrgestell oder den Produktträger zusätzlich in mindestens eine auf einer zweiten Seite des Transferwagens befindlichen zweite Aufnahmevorrichtung zu bewegen und daraus zu entnehmen.

Mit anderen Worten kann das Einfahrgestell oder der Produktträger mit dem hier beschriebenen Transferwagen und dem Aktor nicht nur über eine Seite des Transferwagens in die zweite Aufnahmevorrichtung transferiert oder daraus entnommen werden, sondern über mindestens zwei Seiten des Transferwagens. Es ist also möglich, ein Einfahrgestell oder einen Produktträger über mehrere Seiten des Transferwagens hinein und heraus zu bewegen. Die zweite Aufnahmevorrichtung kann beispielsweise an einem Beschickungswagen angeordnet sein. Anders als im Stand der Technik wird also vorgeschlagen, nicht den Beschickungswagen unmittelbar vor die Behandlungseinheit zu fahren, um das Einfahrgestell zwischen Beschickungswagen und Behandlungseinheit hin- und her zu bewegen. Stattdessen übernimmt ein spezieller möglichst autonom und automatisch agierender Transferwagen Einfahrgestell oder Produktträger aus dem Beschickungswagen und überführt es in die Behandlungseinheit.

Dadurch, dass der Transferwagen entlang der Bodenfläche, also im Wesentlichen horizontal, verfahrbar ist, kann er in unterschiedliche Positionen bewegt werden, in denen er Produktträger aufnimmt oder abgibt. Wenn der Transferwagen in einer Beladungsposition vor einer Beladungsöffnung einer Behandlungseinheit, z.B. eines Backofens, positioniert ist, ist das Einfahrgestell oder der Produktträger über die erste Seite des Transferwagens in die Aufnahmevorrichtung der Behandlungseinheit bewegbar und daraus entnehmbar. Der Transferwagen kann automatisch Behandlungseinheiten oder Beschickungswagen mit der zweiten Aufnahmevorrichtung an anderen Transferpositionen anfahren, wobei die zweite Aufnahmevorrichtung sich entweder auf der ersten Seite oder der zweiten Seite des Transferwagens befinden. Der Aktor zum Bewegen des Produktträgers oder des Einfahrgestells kann in beide Richtungen wirken.

Der Antrieb zum horizontalen Verfahren des Transferwagens kann an dem Transferwagen selbst angeordnet sein. Insbesondere kann der Antrieb als ein Elektromotor ausgebildet sein. Alternativ können Antriebsmittel (z.B. eine Antriebskette) am Boden vorgesehen sein, welches mit dem Transferwagen gekoppelt ist und diesen in die vorgesehenen Positionen verfährt.

Die zweite Seite des Transferwagens kann der ersten Seite des Transferwagens gegenüberliegen. In diesem Fall können Einfahrgestell oder Produktträger auf Führungsschienen des Transferwagens geführt werden, aus denen sie zu beiden Seiten herausschiebbar sind. Alternativ kann die zweite Seite aber auch an der ersten Seite angrenzen. Der Aktor ist derart in oder an dem Transferwagen angeordnet und ausgebildet, dass das Einfahrgestell oder der Produktträger mit dem Aktor entweder über die erste Seite oder über die zweite Seite des Transferwagens transferierbar ist. Transferieren bedeutet insbesondere hineinschieben, hineinziehen, hineinschwenken und/oder hineinheben sowie herausschieben, herausziehen, herausschwenken und/oder herausheben. Beispielsweise ist das Einfahrgestell oder der Produktträger mit dem Aktor von der zweiten Aufnahmevorrichtung über die zweite Seite des Transferwagens in den Transferwagen hineinziehbar und mit dem Aktor über die erste Seite aus dem Transferwagen in die Aufnahmevorrichtung der Behandlungseinheit herausschiebbar und umgekehrt. Der Aktor kann besonders einfach konstruiert sein, wenn die erste Seite und die zweite Seite einander gegenüber liegen.

Durch die hier beschriebene Transfervorrichtung kann der Transferwagen automatisch in verschiedenen Positionen gefahren werden und hier über mehrere Seiten und somit aus verschiedenen Richtungen Einfahrgestelle oder Produktträger aufnehmen oder abgeben. Dadurch ist das Transferieren von Einfahrgestellen oder Produktträgern mit z.B. ungebackenen Teiglingen zwischen Beschickungswagen und Backofen und fertiggebackenen Backwaren zurück zum Beschickungswagen, mit dem die Backwaren zur Verpackung oder zum Verkauf transportiert werden, sehr flexibel und zeitlich voneinander entkoppelt. Entsprechendes gilt für die Beladung und Entladung anderer Vorrichtungen zur Lebensmittelbehandlung wie Gärschränken, Kühl- und Gefrierschränken oder auch Dampfgarern oder Kombidämpfern. Insgesamt können mit der Transfervorrichtung somit Kosten eingespart werden.

In der Praxis kann die Transfervorrichtung eine Leitvorrichtung aufweisen, mit welcher der Transferwagen entlang eines Verfahrwegs geleitet wird.

Durch den Antrieb und die Leitvorrichtung ist der Transferwagen automatisch verfahrbar, insbesondere zwischen einer oder mehrerer zweiten Aufnahmevorrichtungen und einer oder mehrerer Behandlungseinheiten für Lebensmittel.

Die Leitvorrichtung kann in der Praxis eine Schiene, eine Traverse, eine Leiterbahn, oder ein Navigationssystem oder auch eine Kombination hiervon umfassen. Der Antrieb zum Verfahren des Transferwagen kann an dem Transferwagen selbst angeordnet sein und der Transferwagen weist Mittel auf, mit denen er auf einer Bodenfläche rollen oder gleiten kann.

Wenn die Leitvorrichtung eine Schiene ist, weist der Transferwagen beispielsweise Rollen auf, die auf der Schiene rollen und seitliche Führung gewähren. Ein System aus einer Schiene und Rollen ist besonders einfach, robust und verlässlich. Die Schiene definiert in diesem Fall einen vorbestimmten Verfahrweg des Transferwagens. Die Schiene kann am Boden, an der Behandlungseinheit, oder an der Decke des Raumes, in dem sich die Transfervorrichtung befindet, befestigt sein.

Wenn die Leitvorrichtung als elektrische Leiterbahn ausgebildet ist, kann die Leiterbahn im Fußboden vorgesehen sein. Ein entsprechender, an dem Transferwagen angeordneter Sensor erfasst den Verlauf der Leiterbahn und kommuniziert mit einer Steuereinheit zum Lenken des Transferwagens. Wenn der Transferwagen verfahren wird, steuert die Steuereinheit den Antrieb so, dass der Transferwagen der elektrischen Leiterbahn folgt.

Wenn die Leitvorrichtung als Navigationssystem ausgebildet ist, hat der Transferwagen größere Bewegungsfreiheiten. Grundsätzlich kann jedes bekannte Navigationssystem verwendet werden. Insbesondere können eine Rasternavigation oder eine Lasernavigation eingesetzt werden. Ein Verfahren wie die Lasernavigation, bei dem durch Abtasten der Umgebung der Ort bestimmt und Hindernisse erkannt werden, hat den Vorteil, dass es ohne zusätzliche Installationen wie elektrische Leiterschleifen auskommt und bei existierenden Lebensmittelverarbeitungsanlagen ohne aufwändige bauliche Nachrüstungen eingesetzt werden kann. In der Praxis wird dieses Verfahren als SLAM (Simultaneous Localization and Mapping) bezeichnet und dient der simultanen Positionsbestimmung und Kartenerstellung. Durch Abtasten der Umgebung mit Laserstrahlen wird die Umgebung erfasst (Kartenerstellung/Mapping) und die Position in der Umgebung bestimmt. Bestimmte Eigenschaften der abgetasteten Oberflächen, insbesondere der Behandlungseinheit und der Einheit, an welcher die zweite Aufnahmevorrichtung angeordnet ist, erleichtern die Positionsbestimmung und Navigation. Zusätzlich können mechanische Führungselemente, insbesondere nahe der Arbeitspositionen angeordnet sein, welche die Bewegung des Transferwagens führen.

Durch die automatische Leitvorrichtung ist das Transferieren von Einfahrgestellen oder Produktträgern zwischen z.B. den Beschickungswägen mit der zweiten Aufnahmevorrichtung und der Behandlungseinheit mittels der Transfervorrichtung vollautomatisch durchführbar. Das Personal ist von diesen Aufgaben entlastet und kann sich beispielsweise auf das Vorbereiten der Lebensmittel konzentrieren.

In der Praxis kann der Transferwagen mit der Leitvorrichtung im Wesentlichen in waagerechter Richtung quer zu der Richtung verfahrbar sein, in der der Aktor wirkt und das Einfahrgestell oder den Produktträger bewegt. Wenn die Beschickung der Behandlungseinheit und somit die Wirkrichtung des Aktors die Längsrichtung definiert, kann die von der Leitvorrichtung vorgegebene Bewegungsrichtung die Querrichtung sein. Sie ist waagerecht und parallel zu der Seite der Behandlungseinheit orientiert, in der eine Tür zu einem Behandlungsraum der Behandlungseinheit vorgesehen ist. Die Transfervorrichtung kann also vor der Beladungsöffnung der Behandlungseinheit nach links und rechts verfahren werden. Der waagerecht und quer verfahrbare Transferwagen ermöglicht es, die Transfer- und Beladungspositionen zu beiden Seiten des Verfahrwegs nebeneinander anzuordnen. Daraus resultierten ein einfacher und kostengünstiger Aufbau, ein einfaches Steuern und große Flexibilität.

Der Transferwagen kann in der Praxis einen Rahmen aufweisen. Der Rahmen kann sich mindestens über die Höhe und die Breite des Behandlungsraumes der Behandlungseinheit erstrecken, wenn er das Einfahrgestell umgibt. Die der Behandlungseinheit zugewandte Seite und die gegenüberliegende Seite des Transferwagens können die erste und die zweite Seite bilden und offen ausgestaltet sein. Anders ausgedrückt ist der Transferwagen als ein Portal ausgebildet, das von zwei gegenüberliegenden, offenen Seiten zugängig ist. Insbesondere können die Maße der Seite der Behandlungseinheit mit der Behandlungsraumtür und des Rahmens ungefähr deckungsgleich sein.

Für das Beladen und/oder Entladen der der Transfervorrichtung zugeordneten Behandlungseinheit kann der Rahmen mit der ersten offenen Seite an der Beladungsöffnung der Behandlungseinheit positioniert werden und das Einfahrgestell oder der Produktträger wird mittels des Aktors durch die Beladungsöffnung auf der ersten Seite der Transfervorrichtung in die Behandlungseinheit eingebracht bzw. daraus entnommen. Ebenfalls über die erste offene Seite des Rahmens oder alternativ über dessen zweite offene Seite können das Einfahrgestell oder der Produktträger zwischen dem Transferwagen und der zweiten Aufnahmevorrichtung (z.B. Beschickungswagen) transferiert werden.

Die Tragvorrichtung für das Einfahrgestell oder den Produktträger kann in dem Rahmen des Transferwagens angeordnet sein. Die Tragvorrichtung kann z.B. zwei Führungsschienen aufweisen, welche an zwei gegenüberliegenden Seiten des Rahmens befestigt sind und ein Verschieben des Einfahrgestells oder den Produktträgers in ihrer Längsrichtung ermöglichen. Das Einfahrgestell oder der Produktträger können Gleitflächen oder Rollen aufweisen, die auf den Führungsschienen aufliegen.

Der Transferwagen kann unterhalb des Rahmens Laufrollen zum Verfahren aufweisen.

Der Aktor zum Transferieren des Einfahrgestells oder des Produktträgers kann in der Praxis mindestens einen Antrieb und mindestens einen Mitnehmer aufweisen. Der Mitnehmer kann ein Vorsprung sein, der mit einem Widerlager am Einfahrgestell oder Produktträger in Eingriff bringbar ist. Zusätzlich oder alternativ kann der Mitnehmer eine rutschhemmende Oberfläche sein, die mit einer Oberfläche des Einfahrgestells oder des Produktträgers rutschfest in Anlage gebracht werden kann. Der Mitnehmer kann durch den Antrieb in Richtung der ersten und der zweiten Seite des Transferwagens bewegt werden, so dass das Einfahrgestell oder der Produktträger in der Tragvorrichtung in diese Richtung verschoben wird, wenn der Vorsprung mit dem Widerlager in Eingriff ist.

Dem Aktor zum Transferieren des Einfahrgestells oder des Produktträgers kann zusätzlich ein Sensor und eine Steuereinheit zugeordnet sein. Der Sensor, der beispielsweise ein grundsätzlich bekannter optischer Sensor sein kann, überwacht die Position des Mitnehmers und übermittelt die Position betreffende Daten an eine Steuereinheit. Die Steuereinheit steuert den Antrieb des Aktors in Abhängigkeit von der Position des Mitnehmers und dem vorzunehmenden Transfer in den Transferwagen hinein oder daraus heraus. Diese Ausführung ermöglicht die vollständige automatische Durchführung und Überwachung des Transfervorgangs.

Die Erfindung betrifft ferner eine Behandlungsvorrichtung mit mindestens einer Behandlungseinheit für Lebensmittel, die mindestens einen Behandlungsraum mit einer Aufnahmevorrichtung zur Aufnahme von mindestens einem Einfahrgestell oder einem Produktträger aufweist, mit mindestens einer automatisch öffnenden und schließenden Behandlungsraumtür, und mit mindestens einer, der Behandlungseinheit zugeordneten zweiten Aufnahmevorrichtung zur Aufnahme des Einfahrgestells oder des Produktträgers. Die Behandlungsvorrichtung weist ferner die zuvor beschriebene Transfervorrichtung für die Beladung und/oder Entladung der Behandlungseinheit auf.

Die Aufnahmevorrichtung der Behandlungseinheit kann insbesondere als Einfahrschienen ausgebildet sein, die an zwei gegenüberliegenden Innenwänden des Behandlungsraums angeordnet sind und sich auf derselben Höhe befinden, wie die in dem Transferwagen angeordneten Führungsschienen, welche die Tragvorrichtung bilden. Das Einfahrgestell läuft mit Rollen oder Gleitschuhen auf den Schienen und kann mit dem Aktor von den Führungsschienen der Tragvorrichtung auf die Einfahrschienen in dem Behandlungsraum der Behandlungseinheit geschoben und davon heruntergezogen werden. Alternativ oder zusätzlich kann die Aufnahmevorrichtung der Behandlungseinheit auch als einfacher Boden in dem Behandlungsraum ausgebildet sein, oder von Rollen gebildet werden, auf denen Schienen an dem Einfahrgestell verschiebbar sind.

Die Behandlungsraumtür ist an der Beschickungs- oder Beladungsöffnung der Behandlungseinheit angeordnet. Sie kann automatisch geöffnet und geschlossen werden, so dass die Beladung und/oder die Entladung der Behandlungseinheit mit der Transfervorrichtung durch die Beladungsöffnung vollautomatisch durchführbar ist. Die Behandlungsraumtür kann beispielsweise über ein Gelenk schwenkbar an der Behandlungseinheit gelagert sein. Ein Antrieb, insbesondere ein Elektromotor oder ein Pneumatik-Zylinder, kann eine Kraft erzeugen, durch welche die Behandlungsraumtür um die Drehachse des Gelenks schwenkt und somit automatisch öffnet oder schließt. Der die Tür öffnende und schließende Antrieb kann durch elektrische Signale zum Öffnen und zum Schließen gesteuert werden. Die Signale werden von einer die Behandlungsraumtür steuernden Steuereinheit an den Antrieb gesendet, wenn der Transferwagen sich außerhalb des Schwenkbereichs der Behandlungsraumtür befindet. Die Position des Transferwagens kann beispielsweise durch einen Sensor ermittelt werden, welcher mit der Steuereinheit für die Behandlungsraumtür kommuniziert. Das Kommunizieren des Sensors mit der Steuereinheit kann kabellos oder kabelgebunden erfolgen.

**In** der Praxis kann die zweite Aufnahmevorrichtung an mindestens einem Beschickungswagen angeordnet sein, wie oben bereits erwähnt wurde. Alternativ kann die zweite Aufnahmevorrichtung auch an mindestens einer Kühleinheit oder einer Gäreinheit angeordnet sein. Beschickungswägen, Kühleinheiten und Gäreinheiten sind grundsätzlich aus dem Stand der Technik bekannt. Die zweite Aufnahmevorrichtung kann verfahrbar oder an einem Ort fixiert sein.

**In** der Praxis kann der zweiten Aufnahmevorrichtung eine Transferposition zugeordnet sein, in welcher die zweite Aufnahmevorrichtung auf der ersten oder zweiten Seite des Transferwagens zur Durchführung des Transfers des Einfahrgestells oder Produktträgers positionierbar ist. In der Transferposition ist das Einfahrgestell zwischen der zweiten Aufnahmevorrichtung und der Tragvorrichtung des Transferwagens hin und her bewegbar. In der Praxis können eine Vielzahl von Transferpositionen vorgesehen sein sowie mehrere Beladepositionen für verschiedene Behandlungseinrichtungen. Der Transferwagen ist somit zwischen verschiedenen vorbestimmten Positionen, Beladungspositionen und Transferpositionen, verfahrbar und kann flexibel und ohne jeglichen Personaleinsatz zu behandelnde Lebensmittel in die Behandlungseinrichtungen hinein und wieder heraus auf die Beschickungswägen für den Abtransport überführen. So kann beispielsweise die Beladung mehrere Beschickungswägen mit zu backenden Teiglingen vom Backvorgang zeitlich entkoppelt werden. Die beladenen Beschickungswägen können vom Personal an verschiedenen Transferpositionen abgestellt werden und die automatische Überführung der Teiglinge in den Ofen erfolgt ohne Personaleinsatz durch den Transferwagen. Gleiches gilt für die Entnahme der fertig gebackenen Backwaren, die automatisch am Ende des Backvorgangs von dem Transferwagen aus der Behandlungseinrichtung (Backofen) entfernt und auf einen Beschickungswagen gebracht wird. Der Weitertransport kann dann wieder zu gegebener Zeit durch einen Mitarbeiter erfolgen. Gleiches gilt natürlich für andere Lebensmittel und andere Behandlungseinrichtungen als Backöfen.

Eine Behandlungsvorrichtung kann eine Mehrzahl gleicher oder verschiedener Behandlungseinheiten (Backofen, Gärschrank, Gefrierschrank) aufweisen.

Wenn die zweite Aufnahmevorrichtung an einem Wagen mit Rollen an der Unterseite angeordnet ist, kann der Wagen mit der zweiten Aufnahmevorrichtung in der Praxis in die Transferposition verschiebbar und dort arretierbar sein. Das Arretieren kann beispielsweise durch Positionieren der Rollen in einer Mulde im Boden der Transferposition erfolgen. Wenn der Transferwagen an den Wagen mit der zweiten Aufnahmevorrichtung herangefahren ist und der Aktor das Einfahrgestell transferiert, verhindert das Eigengewicht des die zweite Aufnahmevorrichtung tragenden Wagens ein Verfahren aus der Mulde heraus. Der Wagen mit der zweiten Aufnahmevorrichtung kann aber auch durch beliebige andere Führungsmittel (Führungsschienen oder Leitbleche) in die vorgegebene Transferposition geleitet und durch beliebige Arretierungsmittel oder Bremsen in dieser Position fixiert werden.

Die Erfindung betrifft ferner ein Verfahren zum automatischen Beladen und Entladen einer Behandlungseinheit mit einer ersten Aufnahmevorrichtung. Das Verfahren zum automatischen Beladen und Entladen der Behandlungseinheit umfasst die folgenden Verfahrensschritte:
- Positionieren einer zweiten Aufnahmevorrichtung in einer Transferposition;
- automatisches Verfahren eines Transferwagens an die Transferposition;
- Transfer eines Einfahrgestells oder eines Produktträgers zwischen dem Transferwagen und der zweiten Aufnahmevorrichtung in der Transferposition mit einem an dem Transferwagen angeordneten Aktor;
- automatisches Öffnen oder Schließen einer an der Behandlungseinheit vorgesehenen Behandlungsraumtür;
- automatisches Verfahren des Transferwagens in eine Beladungsposition;
- Transfer des Einfahrgestells oder des Produktträgers zwischen dem der Behandlungseinheit und dem Transferwagen in der Beladungsposition durch den an dem Transferwagen angeordneten Aktor.

Wie oben erläutert, wird also nicht das Einfahrgestell oder der Produktträger aus dem Beschickungswagen heraus in den Ofen (bzw. eine andere Behandlungseinheit) überführt sondern durch einen automatisch angetriebenen Transferwagen übernommen, der den Aktor und einen Antrieb aufweist und somit die verschiedenen Transferpositionen und Behandlungseinheiten automatisch und ohne Personal aufwand abfahren und die Produktträger/Einfahrgestelle auf diese Weise der gewünschten Behandlung zuführen und anschließend zum Weitertransport auf Beschickungswägen verbringen kann. Wiederum ist es wünschenswert, wenn der Transfer durch den separaten Transferwagen über mindestens zwei Seiten des Transferwagens erfolgen kann.

Weitere praktische Ausführungsformen und Vorteile der Erfindung sind nachfolgend im Zusammenhang mit den Zeichnungen beschrieben. Es zeigen:
- Fig. 1: eine Behandlungsvorrichtung für Lebensmittel mit einem Transferwagen in einer Ansicht von schräg oben;
- Fig. 2A: eine der Fig 1 entsprechende Ansicht der Behandlungsvorrichtung mit dem Transferwagen in einer Transferposition;
- Fig. 2B: eine der Fig 1 entsprechende Ansicht der Behandlungsvorrichtung mit dem Transferwagen in einer Warteposition;
- Fig. 2C: eine der Fig 1 entsprechende Ansicht der Behandlungsvorrichtung mit dem Transferwagen in einer Beladungsposition;
- Fig. 2D: eine der Fig 1 entsprechende Ansicht der Behandlungsvorrichtung während des Verschließens der Behandlungseinheit;
- Fig. 3A: einen an dem Transferwagen angeordneten Aktor zum Transferieren eines Einfahrgestells in einer ersten Position in einer Ansicht von schräg vorne;
- Fig. 3B: den an dem Transferwagen angeordneten Aktor aus Fig. 3A in einer zweiten Position in einer Ansicht von schräg vorne;
- Fig. 4A: einen Beschickungswagen mit Einfahrgestell zu Beginn des Transfers in den Transferwagen in einer Ansicht von schräg vorne;
- Fig. 4B: eine der Fig. 4A entsprechende Ansicht beim Ergreifen des Einfahrgestells durch den Aktor des Transferwagens;
- Fig. 4C: eine der Fig. 4A entsprechende Ansicht mit weitgehend in dem Transferwagen befindlichen Einfahrgestell;
- Fig. 4D: eine der Fig. 4A entsprechende Ansicht mit vollständig in dem Transferwagen befindlichen Einfahrgestell.

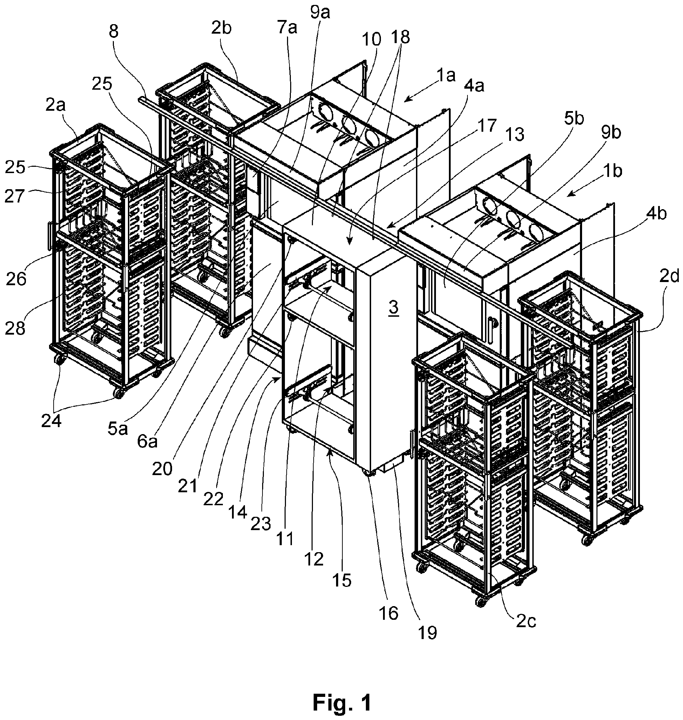

Die Fig. 1 zeigt eine Behandlungsvorrichtung für Lebensmittel, die zwei Backöfen 1a, 1b, vier den zwei Backöfen 1a, 1b zugeordnete Beschickungswägen 2a, 2b, 2c, 2d und einen Transferwagen 3 umfasst. Die beiden Backöfen 1a, 1b und die Beschickungswägen 2a, 2b, 2c, 2d sind jeweils baugleich.

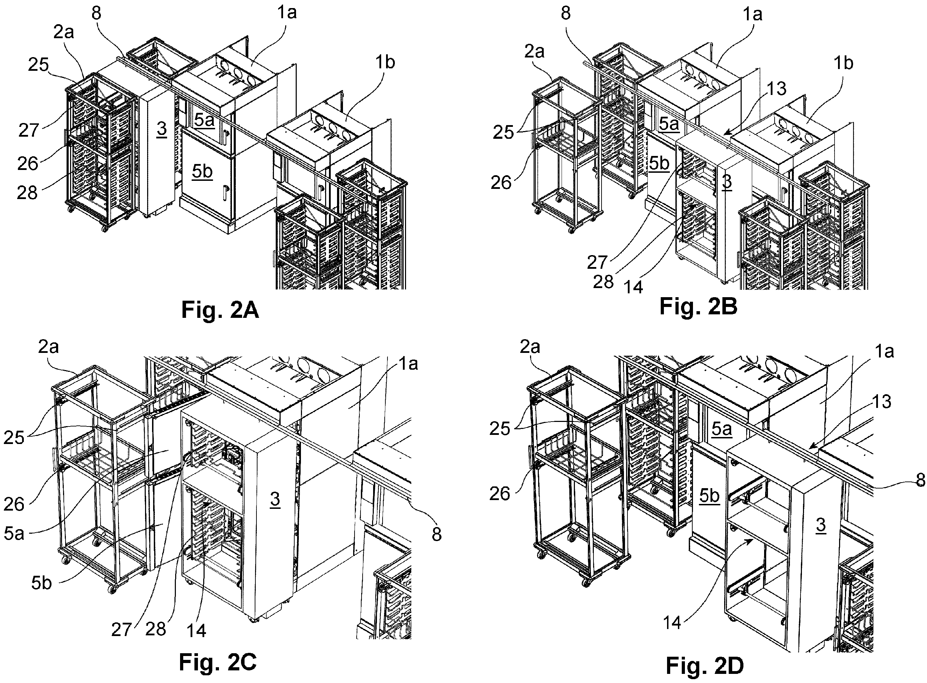

Die in den Fig. 1 und 2A - 2 D dargestellten Backöfen 1a, 1b sind Ladenöfen oder Produktionsbacköfen, die üblicherweise in Bäckereien oder in Backwarenfabriken verwendet werden. Sie umfassen in der dargestellten Ausführungsform jeweils ein Gehäuse 4a, 4b, in dem zwei Backräume übereinander angeordnet sind, und jeweils zwei auf der Vorderseite der Backöfen angeordnete Türen 5a, 6a, 5b, 6b zu den Backräumen. Die Türen 5a, 6a, 5b, 6b sind während des Backvorgangs verschlossen und können zum Einbringen der Teiglinge und Entnehmen der Backwaren automatisch geöffnet und geschlossen werden.

In Fig. 1 sind ferner zwei an der Vorderseite der Backöfen 1a, 1b angeordnete Bedienfelder 7a, 7b mit Anzeigebildschirm zu erkennen. Über die Bedienfelder 7a, 7b können Parameter der Backvorgänge (z.B. Backreihenfolge, Dauer, Temperatur, Beschwadung) eingegeben werden, welche anschließend zur Kontrolle über den Anzeigebildschirm der Bedienfelder 7a, 7b angezeigt werden. Es ist auch möglich, die Backöfen 1a, 1b über Datenverbindungen fernzusteuern. Die Backöfen 1a, 1b sind beabstandet nebeneinander mit derselben Ausrichtung positioniert. Ihre Türen 5a, 6a, 5b, 6b weisen also in dieselbe Richtung.

Vor den Backöfen 1a, 1b ist eine gerade Schiene 8 angeordnet, welche eine Leitvorrichtung für den Transferwagen 3 darstellt. Bezogen auf die nebeneinander angeordneten Backöfen 1a, 1b verläuft die Schiene 8 in waagerecht und in Querrichtung und weist zu jedem Backofen 1a, 1b den gleichen Abstand auf. Sie ist an jeweils einem an dem oberen Rand der Backofenvorderseiten befestigten Überhang 9a, 9b angeordnet, der von der Schwadenhaube gebildet wird. In der Querrichtung ragt die Schiene 8 links und rechts von den Backöfen 1a, 1b um eine Strecke vor, die größer als die Breite des Transferwagens 3 ist. Entlang der Schiene 8 ist der Transferwagen 3 in der Querrichtung zu den Backöfen 1a, 1b horizontal verfahrbar.

Der Transferwagen 3 weist einen Rahmen 10 mit einem oberen Tragbereich 11 und einem unteren Tragbereich 12 auf. Die Maße des Rahmens 10 sind derart auf die Maße der Backöfen 1a, 1b abgestimmt, dass eine erste offene Seite 13 und eine zweite offene 14 Seite des Rahmens 10 im Wesentlichen deckungleich mit der Vorderseite der Backöfen 1a, 1b sind. Außerdem entspricht die Größe des oberen Tragbereiches 11 ungefähr der Größe der oberen Türen 5a, 5b der Backöfen 1a, 1b und die Größe des unteren Tragbereiches 12 der Größe der unteren Türen 6a, 6b. An einer nach unten weisenden Bodenfläche 15 des Rahmens 10 sind Rollen 16 angeordnet, mit denen der Rahmen 10 auf dem Boden verfahrbar ist. Darüber hinaus sind an einer nach oben weisenden Deckfläche 17 des Rahmens 10 Befestigungsmittel 18 für weitere Rollen (nicht dargestellt) vorgesehen, die in der Schiene 8 laufen. Wenn der Transferwagen 3 von einem an der Bodenfläche 15 angeordneten Antrieb 19 angetrieben wird, wird er über die an den Befestigungsmitteln 18 gelagerten Rollen entlang der Schiene 8 geleitet, so dass der Transferwagen 3 automatisch in der horizontalen Querrichtung verfahrbar ist.

Die seitlichen Wände des Rahmens 10 des Transferwagens 3 sind geschlossen, so dass der Rahmen 10 auch als Gehäuse bezeichnet werden kann. Der Rahmen 10 könnte aber auch offen gestaltet werden wie z.B. bei den Beschickungswägen 2a - 2d.

**In** dem oberen und unteren Tragbereich 11, 12 des Transferwagens 3 ist jeweils ein Einfahrgestell 27, 28 aufnehmbar, wie z.B. in Fig 2B gezeigt. Zum Bewegen der Einfahrgestelle 27, 28 weist der Transferwagen 3 im oberen Tragbereich 11 eine obere Tragvorrichtung 20 und einen oberen Aktor 21 sowie im unteren Tragbereich 12 eine untere Tragvorrichtung 22 und einen unteren Aktor 23 auf. Die Tragvorrichtungen 20, 22 sind identisch und jeweils als ein Paar von Führungsschienen ausgebildet, welche jeweils an den gegenüberliegenden vertikalen Innenseiten des Rahmens 10 befestigt sind. Sie tragen die Last der Einfahrgestelle 27, 28 in dem Transferwagen 3 und ermöglichen ein Verschieben der Einfahrgestelle 27, 28 durch die erste und die zweite offene Seite 13, 14 des Rahmens 10 hindurch. Diese Richtung wird als Längsrichtung bezeichnet und verläuft rechtwinklig zur Querrichtung. Die Aktoren 21, 23 sind ebenfalls identisch zueinander. Sie sind dazu ausgebildet, die Einfahrgestelle durch die erste oder die zweite offene Seite 13, 14 hindurch entlang der Führungsschienenpaare 20, 22 in die Tragbereiche 11, 12 des Transferwagens 3 hinein oder daraus herauszubewegen. Einzelheiten der Tragvorrichtungen 20, 22 und der Aktoren 21, 23 werden weiter unten beschrieben.

Die vier Beschickungswägen 2a, 2b, 2c, 2d sind baugleich. Die folgende Beschreibung des Beschickungswagens 2a ist also auf die anderen Beschickungswägen 2b, 2c, 2d übertragbar. Der Beschickungswagen 2a weist ein Traggestell auf, an dessen Unterseite Rollen 24 zum manuellen Verfahren des Beschickungswagens 2a auf dem Boden angeordnet sind. In dem Beschickungswagen 2a sind eine obere zweite Aufnahmevorrichtung 25 und eine untere zweite Aufnahmevorrichtung 26 vorgesehen, die - wie die Tragvorrichtungen 20, 22 des Transferwagens 3 - als Führungsschienenpaare 25, 26 ausgebildet sind. Die Führungsschienenpaare 25, 26 sind an zwei einander gegenüberliegenden Innenseiten des Traggestells des Beschickungswagens 2a befestigt und fluchten in der Längsrichtung mit dem oberen bzw. dem unteren Führungsschienenpaar 20, 21 des Transferwagens 3. Das obere Führungsschienenpaar 25 trägt ein oberes Einfahrgestell 27 und das untere Führungsschienenpaar 26 trägt ein unteres Einfahrgestell 28. Die Einfahrgestelle 27, 28 sind in der Längsrichtung manuell oder mit dem Aktor 21, 23 aus dem Beschickungswagen 2a heraus schiebbar. In die Einfahrgestelle 27, 28 sind beispielsweise Produktträger wie Backbleche (nicht dargestellt) mit Backgut einlegbar. Es ist auch möglich, dass eine Mehrzahl von nicht identischen Beschickungswägen verwendet wird. Beispielsweise können offen gestaltete Beschickungswägen und geschlossene Beschickungswägen vorgesehen sein. Wichtig ist bei den Beschickungswägen, dass Einfahrgestelle oder Produktträger, die darin angeordnet sind, über eine Seite aus den Beschickungswägen in die Transfervorrichtung hinein bzw. aus der Transfervorrichtung heraus transferierbar sind.

In Fig. 1 sind die Beschickungswägen 2a, 2b, 2c, 2d jeweils in einer Transferposition dargestellt. Die Transferpositionen sind vorbestimmte Positionen der Beschickungswägen 2a, 2b, 2c, 2d, in denen deren Führungsschienen 25, 26 mit den Führungsschienen 21, 22 im Transferwagen 3 fluchten, wenn dieser zu dem jeweiligen Beschickungswagen 2a, 2b, 2c, 2d ausgerichtet ist. In dieser Transferposition sind die Rollen 24 unter den Beschickungswägen durch eine Bremse oder sonstige Arretiervorrichtung (nicht dargestellt) feststellbar. Für den Transfer der Einfahrgestelle 27, 28 sind die oberen Führungsschienenpaare 25 und 20 sowie die unteren Führungsschienenpaare 26 und 22 jeweils gleichartig ausgebildet.

Natürlich kann die Behandlungsvorrichtung auch mehr oder weniger Backöfen und/oder mehr oder weniger Beschickungswägen mit zweiten Aufnahmevorrichtungen aufweisen, als in der Fig. 1 dargestellt. Auch können andere Behandlungseinheiten als Backöfen vorhanden sein.

In den Fig. 2A, 2B, 2C und 2D ist die Behandlungsvorrichtung der Fig. 1 in unterschiedlichen Zuständen während eines Beladungsvorgangs des Backofens 1a dargestellt. Fig. 2A zeigt die Behandlungsvorrichtung in einem ersten Zustand, in dem der Transferwagen 3 durch automatisches Verfahren entlang der Schiene 8 an die Transferpositionen der Beschickungswägen 2a und 2b herangefahren wurde. In dieser Stellung des Transferwagens 3 können die Einfahrgestelle 27, 28 von den in den angrenzenden Transferpositionen positionierten und arretierten Beschickungswägen 2a oder 2b in den Transferwagen 3 bewegt werden. Hierfür ermittelt zunächst ein erster Positionsmesssensor (nicht dargestellt), der an dem Transferwagen 3 und/oder an der Schiene 8 angeordnet ist, ob mindestens einer der Beschickungswägen 2a, 2b in der Transferposition angeordnet ist, ob sich der Transferwagen 3 in der daran angrenzenden Position befindet und ob mindestens ein Einfahrgestell 27, 28 in einem Beschickungswagen 2a, 2b oder dem Transferwagen aufgenommen ist. Wenn diese Voraussetzung erfüllt ist, kann eine Steuereinheit zum Steuern der Aktoren 21, 23 (nicht dargestellt) die Aktoren 21, 23 betätigen, und der Transfer des/der Einfahrgestelle 27, 28 von dem mindestens einen Beschickungswagen zu dem Transferwagen 3 wird automatisch durchgeführt. Wenn zwei Beschickungswägen mit jeweils mindestens einem Einfahrgestell 27, 28 in der Transferposition positioniert sind, wählt die Steuereinheit zum Steuern der Aktoren 21, 23 automatisch oder gemäß Informationen über die Beladung der Einfahrgestelle die aktuell zu überführenden Einfahrgestelle 27, 28 aus. Das Übermitteln von Signalen des ersten Positionsmesssensors sowie der Beladungsinformationen an die Steuereinheit kann beispielsweise über Funk stattfinden.

Fig. 2B zeigt die Behandlungsvorrichtung in einem zweiten Zustand, nachdem die Einfahrgestelle 27, 28 von dem Beschickungswagen 2a in den Transferwagen 3 überführt worden sind. Der Transferwagen 3 ist entlang der Schiene 8 hin zu einer ersten Warteposition bewegt worden. Die erste Warteposition nimmt der Transferwagen 3 für eine kurze Zeit ein, während eine oder beide der Türen 5a, 6a, des Backofens aufgeschwenkt werden. Wenn der Transferwagen 3 in der ersten Warteposition ist, registriert dies der erste Positionsmesssensor am Transferwagen 3 und sendet automatisch ein "Öffnen"-Signal an eine Steuereinheit zum Steuern der Türen 5a, 6a. Die Steuereinheit steuert einen Antrieb (nicht dargestellt) zum Aufschwenken mindestens einer der Türen 5a, 6a.

Fig. 2C zeigt die Behandlungsvorrichtung in einem dritten Zustand, in dem die Türen 5a, 6a geöffnet sind. Somit sind Beladungsöffnungen, die in den Fig. 2A und 2B durch die Türen 5a, 6a verschlossen sind, freigegeben und der Transferwagen 3 kann durch Verfahren entlang der Schiene 8 mit der ersten offenen Seite 13 des Rahmens 10 an den Beladungsöffnungen des Ofens 1a angrenzend positioniert werden. Der erste Positionsmesssensor registriert diese Beladungsposition und sendet erneut automatisch das "Transferieren"-Signal an die Steuereinheit zum Steuern der Aktoren 21, 23. Die Einfahrgestelle 27, 28 können dann automatisch durch die Aktoren 21, 23 durch die erste offene Seite 13 des Transferwagens 3 hindurch in der Längsrichtung in die Backräume des Backofens 1a bewegt werden. Weitere Details zu dem Vorgang der Beladung mit den Aktoren 21, 23 sind weiter unten beschrieben.

Fig. 2D zeigt die Behandlungsvorrichtung in einem vierten Zustand, in dem die Einfahrgestelle 27, 28 von dem Transferwagen 3 in den Backofen 1a übertragen worden sind. Der Transferwagen 3 ist von der Beschickungsposition entlang der Schiene 8 weg, hin zur Warteposition bewegt worden. Der erste Positionsmesssensor sendet automatisch ein "Schließen"-Signal an die Steuereinheit zum Steuern der Türen 5a, 6a.

Der Transferwagen 3 kann entweder in dieser Warteposition verharren, bis der Backvorgang abgeschlossen ist, und anschließend das Entladen des Backofens 1a in umgekehrter Reihenfolge durchführen, wie das Beladen. Alternativ kann der Transferwagen 3 eine Be- oder Entladung des Backofens 1b durchführen. Beispielsweise kann der Backofen mit den Einfahrgestellen 27, 28 der Beschickungswägen 2b, 2c, oder 2d beladen werden, oder bereits in dem Backofen 1b angeordnete Einfahrgestelle 27, 28 können entnommen und in den Beschickungswagen 2a übergeben werden.

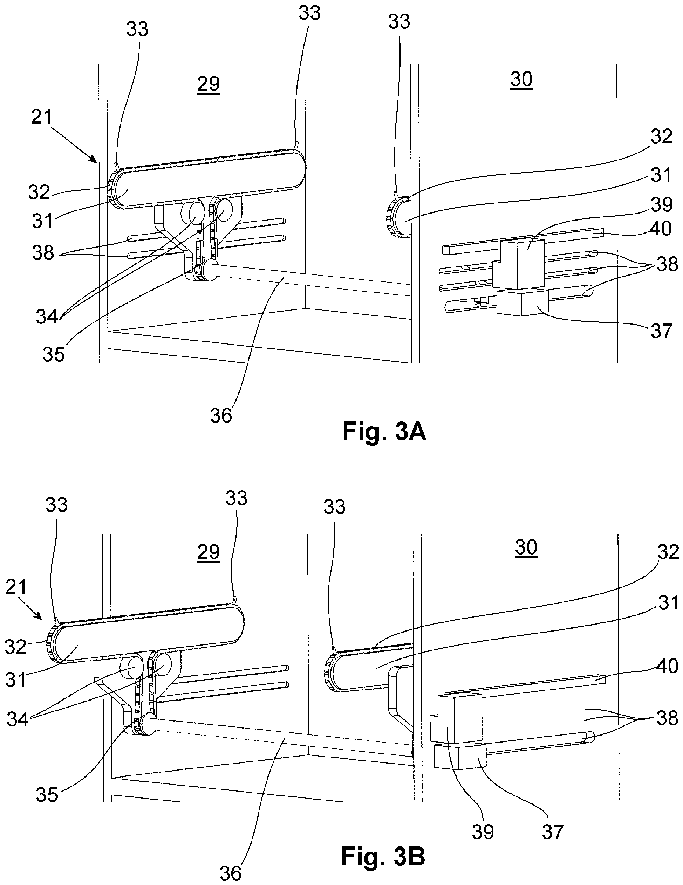

In den Fig. 3A und 3B ist der an dem Transferwagen 3 angeordnete obere Aktor 21 im Detail dargestellt. Der untere Aktor 23 ist zu diesem identisch aufgebaut. In der Fig. 3A ist der Aktor 21 in einer ersten Position in der Mitte des Transferwagens 3 dargestellt und in Fig. 3B in einer zweiten Position, in welcher der Aktor 21 über die zweite offene Seite 14 des Transferwagens 3 hinausragt.

Der Aktor 21 ist an zwei in der Querrichtung einander gegenüberliegenden Seitenwänden 29, 30 des Rahmens 10 angeordnet und im Wesentlichen spiegelsymmetrisch. Zwei identische Riemenführungen 31 des Aktors, die jeweils einen Antriebsriemen 32 mit Mitnehmern 33 führen, sind an den Innenflächen der Seitenwände 29, 30 des Transferwagens 3 angeordnet. Die Antriebsriemen 33 sind um Riemenräder 34 geführt und werden jeweils von einem Antriebsriemenrad 35 angetrieben. Die Antriebsriemenräder 35 sind an einer zwischen den Riemenführungen 31 gelagerten Kopplungswelle 36 befestigt und die Kopplungswelle 36 ist von einem ersten Aktor-Antrieb 37 antreibbar. Wenn die Kopplungswelle 36 eine durch den ersten Aktor-Antrieb 37 bewirkte Drehbewegung ausführt, wird diese Bewegung über die Antriebsriemenräder 35 auf die Antriebsriemen 32 an beiden Seitenwänden 29, 30 des Transferwagens 3 übertragen, so dass die Mitnehmer 33 synchron angetrieben werden. Die Mitnehmer 33 sind vorliegend als senkrecht von dem Antriebsriemen 32 hervorstehende Zapfen ausgebildet, die Widerlager am oberen Einfahrgestell 27 hintergreifen können. Wenn die Mitnehmer 33 die Widerlager am Einfahrgestell 27 hintergreifen, kann das Einfahrgestell 27 gemeinsam mit den Mitnehmern 33 entlang der Riemenführung 31 bewegt werden. Dadurch kann das Einfahrgestell 27 von dem Führungsschienenpaar 25 des Beschickungswagens 2a auf das Führungsschienenpaar 20 des Transferwagens 3 gedrückt bzw. gezogen werden. Alternativ zu den Riemen und Riemenrädern kann der Aktor 21 natürlich auch eine Kette und Zahnräder aufweisen, die den Antrieb der Mitnehmer bewirken.

Ferner sind in den Seitenwänden 29,30 des Rahmens 10 in Längsrichtung des Transferwagens 3 orientierte Führungsnuten 38 eingebracht, in welchen der erste Aktor-Antrieb 37 und ein zweiter Aktor-Antrieb 39 verschiebbar gelagert sind. Vorliegend sind die Aktor-Antriebe 37, 39 an der Außenfläche der Seite 29 und/oder 30 angeordnet. Der zweite Aktor-Antrieb 39 kann ein Zahnrad aufweisen, dessen Zähne in eine parallel zu den Führungsnuten 38 orientierte Zahnstange 40 greifen. Wenn das Zahnrad durch den zweiten Aktor-Antrieb 39 angetrieben wird, werden der zweite Aktor-Antrieb 39 und die über die Kopplungswelle 36 starr damit verbundenen Riemenführungen 31 entlang der Zahnstange verschoben. Diese Verschiebung ist durch die unterschiedlichen Positionen des Aktors 21 in den Fig. 3A und Fig. 3B dargestellt. Durch die mechanische Verbindung der Riemenführungen 31 durch die Kopplungswelle 36 reicht es aus, wenn an einer Seite des Aktors 21 ein erster und ein zweiter Aktor-Antrieb 37, 39 vorgesehen ist. Alternativ kann auch an beiden Seiten 29, 30 ein erster und ein zweiter Aktor-Antrieb 37, 39 vorgesehen sein. In diesem Fall kann auf eine Verbindung mit der Kopplungswelle 36 verzichtet werden. Weiterhin alternativ können die Aktoren 21, 23 und deren Antriebe 37, 39 an beliebigen anderen Positionen in der Mitte oder an der Seite des Transferwagens 3 angeordnet sein. Es muss lediglich sichergestellt sein, dass die Aktor-Antriebe derart mit dem Transferwagen zusammenwirken können, dass das Einfahrgestell verlagert werden kann.

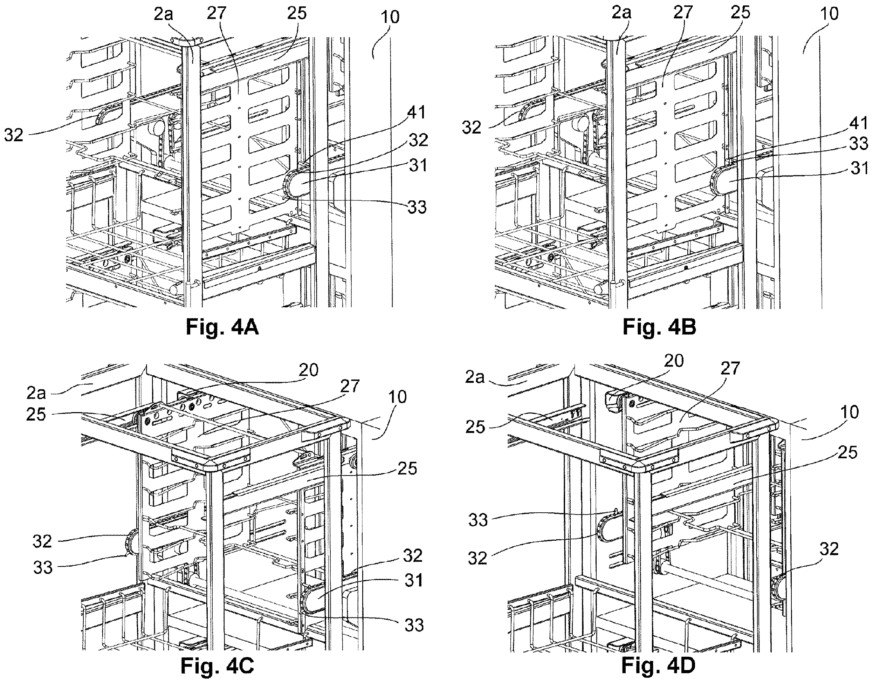

In den Fig. 4A, 4B, 4C, 4D ist ein Transfer des oberen Einfahrgestells 27 von dem Beschickungswagen 2a in der Transferposition zu dem Transferwagen im Detail dargestellt. Der Transfer des unteren Einfahrgestells 28 und der Transfer aus den anderen Beschickungswägen 2b, 2c, 2d funktioniert auf dieselbe Weise.

Wenn der Transferwagen 3 an die Transferpositionen des Beschickungswagens 2a herangefahren wurde, sendet der erste Positionsmesssensor das "Transferieren"-Signal an die Steuereinheit zum Steuern des Aktors 21, woraufhin die Aktor-Antriebe 37, 39 den Transfer bewirken.

Fig. 4A zeigt den Beginn des Transfers, bei dem Rollen des Einfahrgestells 27 auf dem oberen Führungsschienenpaar 25 des Beschickungswagens 2a aufliegen und das Einfahrgestell 27 tragen. Der Aktor 21 ist von dem zweiten Aktor-Antrieb 39 in der Längsrichtung durch die zweite offene Seite 14 des Transferwagens 3 in den zweiten Beschickungswagen 2a hinein bewegt worden. Die gezeigte Position des Aktors 21 entspricht der in Fig. 3B dargestellten Position. Die Antriebsriemen 32 sind so eingestellt, dass die Mitnehmer 33 in der Längsrichtung vorragen und somit an Widerlagern 41 des Einfahrgestells 2a vorbei bewegt werden können. Ein zweiter Positionsmesssensor (nicht dargestellt) erfasst fortlaufend die Position des Aktors 21 in Relation zum Transferwagen 3 und die Stellung der Antriebsriemen 32 in den Riemenführungen 31, und übermittelt diese an die Steuereinheit zum Steuern des Aktors 21. Wenn der Aktor 21 die in der Fig. 4A dargestellte Position eingenommen hat, sendet der zweite Positionsmesssensor ein Signal an die Steuereinheit zum Steuern des Aktors, woraufhin der erste Aktor-Antrieb 37 die Antriebsriemen 32 derart antreibt, dass die Mitnehmer 33 die Riemenführungen 31 umlaufen bis sie, wie in Fig. 4B dargestellt, nach oben ragen und mit den Widerlagern 41 in Eingriff kommen.

Beim weiteren Antrieb des Antriebsriemens 32 durch die beiden über die Kopplungswelle 36 (Fig. 3A und B) gekoppelten Antriebsriemenräder 35 ziehen die mit den Widerlagern 41 in Eingriff befindlichen Mitnehmer 33 das Einfahrgestell 27 zum Transferwagen 3 hin, bis es sich vollständig über dem Aktor befindet. Diese Stellung ist in Fig. 4C dargestellt. In dieser Stellung wird das Einfahrgestell 27 teilweise von dem Führungsschienenpaar 25 des Beschickungswagens 2a und teilweise von dem Führungsschienenpaar 20 des Transferwagens 3 getragen.

Anschließend wird wieder der zweite Aktor-Antrieb 39 aktiviert und zieht die Riemenführungen 31 vollständig in den Transferwagen 3. Diese Stellung ist in Fig. 4D dargestellt. Auch das von den Mitnehmern 33 über den Riemenführungen 31 des Aktors 21 gehaltene Einfahrgestell 27 wird dabei vollständig in den Transferwagen 3 hinein gezogen und stützt sich vollständig auf dem Führungsschienenpaar 20 des Transferwagens 3 ab.

Der Transfer des Einfahrgestells von dem Transferwagen 3 in den Backofen 1a erfolgt umgekehrt. Zunächst wird der Aktor 21 mit dem Einfahrgestell 27 durch den zweiten Aktor-Antrieb 39 durch die erste offene Seite 13 des Transferwagens 3 bewegt. Wenn der Aktor 21 eine Endposition eingenommen hat, in der er maximal aus dem Transferwagen 3 heraus und in den Backraum des Backofens 1a hineinragt, aktiviert die Steuereinheit zum Steuern des Aktors den ersten Aktor-Antrieb 37, der über die Antriebsriemenräder 35 und die Antriebsriemen 32 die Mitnehmer 33 in den Backraum hinein bewegt, welche ihrerseits das Einfahrgestell 27 vollständig in den Backofen 1a verlagern. Anschließend wird der Aktor wieder in den Transferwagen 3 zurückgezogen werden und die Backofentür kann geschlossen werden.

Der Transfer des Einfahrgestells 27 aus dem Backofen 1a hinaus in den Transferwagen 3 hinein funktioniert auf dieselbe Weise, wie der Transfer aus dem Beschickungswagen 2a in den Transferwagen 3. Anschließend verfährt der Transferwagen 3 wieder in eine Position, in der er zu einem Beschickungswagen (z.B. 2a) ausgerichtet ist. In dieser Position erfolgt der Transfer von dem Transferwagen 3 in den Beschickungswagen 2a auf dieselbe Weise wie der zuvor beschriebene Transfer von dem Transferwagen 3 in den Backofen 1a.

Es ist zu erkennen, dass der Aktor 21 ein in dem Transferwagen 3 befindliches Einfahrgestell zu beiden Seiten des Transferwagens 3 auf eine dort befindliche Aufnahmevorrichtung überführen kann. Entsprechendes gilt für den zweiten Aktor 23 des Transferwagens.

Es ist anzumerken, dass die hier beschriebene Konstruktion und Wirkungsweise des Aktors nur beispielhaft erläutert ist. Der Aktor kann auch auf andere Weise realisiert werden, beispielsweise als in dem Transferwagen angeordneter Schwenkarm, der aus dem Transferwagen herausschwenkbar ist, oder als längsverschiebbarer Arm, der aus dem Transferwagen herausschiebbar ist und dessen Ende mit einer Aufnahme an dem Einfahrgestell zusammenwirkt.

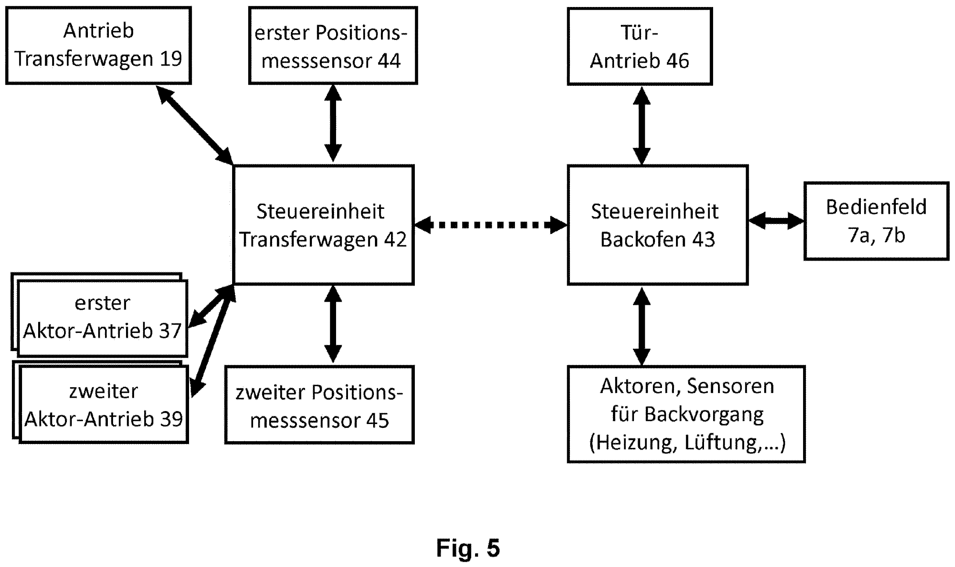

In der Fig. 5 ist ein Blockdiagramm dargestellt, in dem beispielhaft die Kommunikation der elektronischen Funktionselemente der Behandlungsvorrichtung dargestellt ist. Die Pfeile zeigen Kommunikationswege an. Dabei kann die Kommunikation zwischen der Steuereinheit des Transferwagens 42 und der Steuereinheit des Backofens 43 drahtlos erfolgen. Dies erspart die Verkabelung der zueinander beweglichen Steuereinheiten. Die Steuereinheiten des Transferwagens 42 und des Backofens 43 sind vorzugsweise mit einem Kommunikationsnetz verbunden, über das sie miteinander und mit weiteren Einrichtungen sowie einem zentralen Computer der Backanlage kommunizieren können.

Die Steuereinheit des Transferwagens 42 steuert die ersten und die zweiten Aktor-Antriebe 37, 39 der Aktoren 21, 23 sowie den Fahrantrieb des Transferwagens 19. Die Steuereinheit 43 des Backofens 1a steuert den gesamten Backofenbetrieb, einschließlich des Tür-Antriebs für die Backofentür. Sie ist in üblicherweise mit dem Bedienfeld 7a ausgerüstet, kann aber auch über das genannte Kommunikationsnetz oder eine Fernsteuerung (nicht dargestellt) ferngesteuert werden.

Ein erster Positionsmesssensor 44 ermittelt, ob mindestens ein Beschickungswagen 2a, 2b, 2c, 2d in der Transferposition angeordnet ist und ob mindestens ein Einfahrgestell 27, 28 in einem Beschickungswagen 2a, 2b, 2c, 2d aufgenommen ist. Dieser kann an dem Transferwagen 3, an dem oder den Beschickungswägen 2a, 2b, 2c, 2d, oder auch stationär in der Transfervorrichtung angeordnet sein. Neben der Position der Beschickungswägen 2a, 2b, 2c, 2d können auch Informationen über die Beladung der darin befindlichen Einfahrgestelle über das Kommunikationsnetz übermittelt werden, insbesondere zur Steuereinheit des Backofens 43, um diesen optimal zu betreiben.

Der zweite Positionsmesssensor 45 zum Messen der Position des Aktors 21 in Relation zum Transferwagen 3 und der Stellung der Antriebsriemen 32 in den Riemenführungen 31 übermittelt ebenfalls die Messergebnisse fortlaufend an die Steuereinheit zum Steuern der Aktoren 21, 23.

Mittels der Positionsmesssensoren 44, 45 und der Steuerungen 42, 43 können die beweglichen Teile (Transferwagen 3, Beschickungswägen 2a, 2b, 2c, 2d, Backofentüren 5a, 6a, Aktoren 21, 23) so bewegt werden, dass die Überführung der Einfahrgestelle zwischen den Backöfen 1a, 1b und den Beschickungswägen vollautomatisch abläuft, ohne Kollisionen dieser beweglichen Teile.

Die in der vorliegenden Beschreibung, in den Zeichnungen sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein. Die Erfindung ist nicht auf die beschriebenen Ausführungsformen beschränkt. Sie kann im Rahmen der Ansprüche und unter Berücksichtigung der Kenntnisse des zuständigen Fachmanns variiert werden.

### Bezugszeichenliste

- 1a, 1b: Backofen
- 2a, 2b, 2c, 2d: Beschickungswagen
- 3: Transferwagen
- 4a, 4b: Gehäuse des Ofens
- 5a, 5b: obere Tür
- 6a, 6b: untere Tür
- 7a, 7b: Bedienfeld
- 8: Schiene; Leitvorrichtung
- 9a, 9b: Überhang
- 10: Rahmen des Transferwagens
- 11: oberer Tragbereich des Transferwagens
- 12: unterer Tragbereich des Transferwagens
- 13: erste Seite des Transferwagens; erste offene Seite des Rahmens
- 14: zweite Seite des Transferwagens; zweite offene Seite des Rahmens
- 15: Bodenfläche des Rahmens
- 16: Rollen unter dem Transferwagen
- 17: Deckfläche des Rahmens
- 18: Befestigungsmittel
- 19: Antrieb des Transferwagens
- 20: obere Tragvorrichtung, oberes Führungsschienenpaar des Transferwagens
- 21: oberer Aktor
- 22: untere Tragvorrichtung, unteres Führungsschienenpaar des Transferwagens
- 23: unterer Aktor
- 24: Rollen unter dem Beschickungswagen
- 25: obere zweite Aufnahmevorrichtung; oberes Führungsschienenpaar des Beschickungswagens
- 26: untere zweite Aufnahmevorrichtung; unteres Führungsschienenpaar des Beschickungswagens
- 27: oberes Einfahrgestell
- 28: unteres Einfahrgestell
- 29: Seitenwand des Rahmens
- 30: Seitenwand des Rahmens
- 31: Riemenführung des Aktors
- 32: Antriebsriemen
- 33: Mitnehmer
- 34: Riemenräder
- 35: Antriebsriemenräder
- 36: Kopplungswelle
- 37: erster Aktor-Antrieb
- 38: Führungsnuten
- 39: zweiter Aktor-Antrieb
- 40: Zahnstange
- 41: Widerlager
- 42: Steuereinheit des Transferwagens
- 43: Steuereinheit des Backofens
- 44: erster Positionsmesssensor
- 45: zweiter Positionsmesssensor
- 46: Türantrieb

## Patentansprüche

1. Behandlungsvorrichtung für Lebensmittel mit
- einer Behandlungseinheit für Lebensmittel (1a, 1b), die mindestens einen Behandlungsraum mit einer Aufnahmevorrichtung zur Aufnahme von mindestens einem Einfahrgestell (27, 28) oder Produktträger aufweist;
- mindestens einer der Behandlungseinheit für Lebensmittel (1a, 1b) zugeordneten zweiten Aufnahmevorrichtung (25, 26) zur Aufnahme des Einfahrgestells (27, 28) oder Produktträgers;
**gekennzeichnet durch** mindestens eine Transfervorrichtung für die Beladung und/oder Entladung der Behandlungseinheit für Lebensmittel (1a, 1b), mit einem verfahrbaren Transferwagen (3), der eine Tragvorrichtung (20, 22) für mindestens ein Einfahrgestell (27, 28) oder für mindestens einen Produktträger aufweist, mit einem Antrieb (19) zum Verfahren des Transferwagens (3), und mit einem an dem Transferwagen (3) angeordneten Aktor (21, 23), der dazu bestimmt ist, das Einfahrgestell (27, 28) oder den Produktträger in eine auf einer ersten Seite (13) des Transferwagens (3) befindlichen Aufnahmevorrichtung der Behandlungseinheit für Lebensmittel (1a, 1b) zu bewegen und daraus zu entnehmen, **dadurch gekennzeichnet, dass** der Transferwagen (3) und der Aktor (21, 23) dazu eingerichtet sind, das Einfahrgestell (27, 28) oder den Produktträger zusätzlich in mindestens eine auf einer zweiten Seite (14) des Transferwagens (3) befindlichen zweite Aufnahmevorrichtung (25, 26) zu bewegen und daraus zu entnehmen.

2. Behandlungsvorrichtung nach Anspruch 1, **dadurch gekennzeichnet, dass** die Transvervorrichtung eine Leitvorrichtung (8) aufweist, welche den Transferwagen (3) entlang des Verfahrwegs leitet.

3. Behandlungsvorrichtung nach Anspruch 2, **dadurch gekennzeichnet, dass** die Leitvorrichtung (8) mindestens eines der folgenden aufweist:
- eine Schiene (8);
- eine Leiterbahn;
- ein Navigationssystem.

4. Behandlungsvorrichtung nach einem der Ansprüche 1 bis 3, **dadurch gekennzeichnet, dass** der Transferwagen (3) einen Rahmen (10) aufweist, wobei die erste Seite (13) und die zweite Seite (14) des Rahmens (10) offen sind und einander gegenüberliegen.

5. Behandlungsvorrichtung nach einem der Ansprüche 1 bis 4, **dadurch gekennzeichnet, dass** der Aktor (21, 23) mindestens einen Antrieb (37, 39) und einen Mitnehmer aufweist.

6. Behandlungsvorrichtung nach Anspruch 5, **dadurch gekennzeichnet, dass** dem Aktor (21, 23) mindestens ein Sensor (45) und eine Steuereinheit (42) zugeordnet ist.

7. Behandlungsvorrichtung nach einem der vorstehenden Ansprüche, **dadurch gekennzeichnet, dass**
- die Behandlungseinheit mindesten eine automatisch öffnende und schließende Behandlungsraumtür (5a, 5b, 6a, 6b) aufweist.

8. Behandlungsvorrichtung nach einem der vorstehenden Ansprüche, **dadurch gekennzeichnet, dass** die zweite Aufnahmevorrichtung (25, 26) an mindestens einem der folgenden angeordnet ist:
- einem Beschickungswagen (2a, 2b, 2c, 2d);
- einer Kühleinheit;
- einer Gäreinheit.

9. Behandlungsvorrichtung nach Anspruch 7 oder 8 **dadurch gekennzeichnet, dass** der mindestens einen zweiten Aufnahmevorrichtung (25, 26) eine Transferposition zugeordnet ist, in welcher die zweite Aufnahmevorrichtung (25, 26) auf der ersten (13) oder zweiten Seite (14) des Transferwagens (3) positionierbar ist und in welcher das Einfahrgestell (27, 28) oder der Produktträger in die zweite Aufnahmevorrichtung (25, 26) hinein bewegbar und daraus entnehmbar ist.

10. Behandlungsvorrichtung nach Anspruch 9, **dadurch gekennzeichnet, dass** die zweite Aufnahmevorrichtung (25, 26) verschiebbar und in der Transferposition arretierbar ist.

11. Verfahren zum automatischen Beladen und Entladen einer Behandlungseinheit (1a, 1b) für Lebensmittel mit einer ersten Aufnahmevorrichtung, mit den folgenden Verfahrensschritten:
- Positionieren einer zweiten Aufnahmevorrichtung (25, 26) in einer Transferposition;
- automatisches Verfahren eines Transferwagens (3) an die Transferposition;
- Transfer eines Einfahrgestells (27, 28) oder eines Produktträgers zwischen dem Transferwagen (3) und der zweiten Aufnahmevorrichtung (25, 26) in der Transferposition mit einem an dem Transferwagen (3) angeordneten Aktor (21, 23);
- automatisches Öffnen oder Schließen einer an der Behandlungseinheit (1a, 1b) vorgesehenen Behandlungsraumtür (5a, 5b, 6a, 6b);
- automatisches Verfahren des Transferwagens (3) in eine Beladungsposition;
- Transfer des Einfahrgestells (27, 28) oder des Produktträgers zwischen der Behandlungseinheit (1a, 1b) und dem Transferwagen (3) in der Beladungsposition durch den an dem Transferwagen (3) angeordneten Aktor (21, 23).

12. Verfahren nach Anspruch 11, **dadurch gekennzeichnet, dass** der Transfer des Einfahrgestells (27, 28) oder Produktträgers durch den Aktor (21, 23) über mindestens zwei verschiedene Seiten (13, 14) des Transferwagens (3) erfolgt.
